# EUROPÄISCHE PATENTSCHRIFT

(11) **EP 0 536 677 B1**
(45) Veröffentlichungstag und Bekanntmachung des Hinweises auf die Patenterteilung: **08.01.1997**
(21) Anmeldenummer: 92116988.4
(22) Anmeldetag: 05.10.1992
(51) Int. Cl.: B60R 21/28

(54) **Sicherheitseinrichtung zum Schutz eines Insassens eines Kraftfahrzeuges gegen Verletzungen beim Aufprall**
Safety device for the protection of vehicle occupants against injury in case of accident
Dispositif de protection d'un occupant d'un véhicule automobile contre les blessures durs à un accident

(30) Priorität: 10.10.1991 DE 4133506
(43) Veröffentlichungstag der Anmeldung: 14.04.1993
(73) Patentinhaber: Dynamit Nobel GmbH Explosivstoff- und Systemtechnik, 53840 Troisdorf (DE)
(72) Erfinder: Brede, Uwe, W-8510 Fürth (DE); Kraft, Josef, W-8438 Berg (DE)
(74) Vertreter: Schulz, Wilfried, Dipl.-Ing.

(56) Entgegenhaltungen:
- DE-A- 2 324 571
- DE-A- 3 147 780
- FR-A- 2 520 238

## Beschreibung

Die Erfindung betrifft eine Sicherheitseinrichtung nach dem Oberbegriff des Anspruchs 1.

Sicherheitseinrichtungen dieser Art, auch "Airbag"-Systeme genannt, arbeiten derart, daß ein in einem einseitig offenen und ansonsten geschlossenen Gehäuse untergebrachter Gasgenerator gezündet wird und Druckgas erzeugt, wenn auf das Kraftfahrzeug Beschleunigungs- oder Verzögerungskräfte einwirken, deren Absolutwert eine vorgegebene Größe überschreiten. Der gezündete Gasgenerator erzeugt Druckgas, durch das ein mit dem Gehäuse verbundenes Gaskissen gefüllt (aufgeblasen) wird. Das Gaskissen besteht aus einer mit der Gehäusewandung gasdicht verbundenen und das Gehäuse zur offenen Seite hin verschließenden Folie, die aus einem gasdichten Material besteht und in der Abströmöffnungen ausgebildet sind. Alternativ werden als Material für das Gaskissen auch (Filter-)Gewebe verwendet, bei denen die Abstände zwischen den Fäden des Gewebes als Abströmöffnungen fungieren. Beim Eintauchen des zu schützenden Insassens in das druckgasgefüllte Gaskissen wird auf das darin enthaltene Gas zusätzlicher Druck ausgeübt, weshalb das Gas über die Abströmöffnungen aus dem Gaskissen herausgedrängt wird. Hierbei haben die Abströmöffnungen eine Drosselwirkung, wodurch der auftreffende Körper soweit verzögert wird, daß keine kritischen Beschleunigungswerte mehr auf ihn wirken. Die Rate, mit der der Gasgenerator das Druckgas erzeugt (Gasmengenerzeugung pro Zeiteinheit) ist temperaturabhängig. Bei den gegenwärtig in den Gasgeneratoren überwiegend eingesetzten Gassätzen wird bei der unteren Grenze des in Betracht zu ziehenden Betriebstemperaturbereiches von -35 °C bis +85 °C weniger Gas pro Zeiteinheit erzeugt als bei der oberen Temperaturgrenze. Dies führt dazu, daß das Gaskissen bei hohen (Außen-) Temperaturen praller gefüllt ist und damit das Auffangverhalten für den zu schützenden Insassen anders ist als bei niedrigen Temperaturen, bei denen das Gaskissen weniger stark gefüllt ist.

Die DE-A-31 47 780 beschreibt eine passive Aufprallsicherungsvorrichtung für Kraftfahrzeuginsassen mit einem aufblasbaren Kissen bzw. Luftsack. Es wird hier auf die Problematik eingegangen, daß erhöhte Umgebungstemperaturen eine erhöhte Verbrennungsgeschwindigkeit des Treibmittels hervorrufen. Zur Lösung dieses Problems wird eine Abströmungsöffnung schlagartig in Abhängigkeit von der Umgebungstemperatur und des Airbagdrucks geöffnet.

In der DE-A-23 24 571 ist eine gattungsgemäße Sicherheitseinrichtung beschrieben, die eine variable steuerbare Auslaßöffnung aufweist.

Der Erfindung liegt die Aufgabe zugrunde, eine Sicherheitseinrichtung zum Schutz eines Insassens eines Kraftfahrzeuges gegen Verletzungen beim Aufprall zu schaffen, bei der trotz unterschiedlichem Innendruck des gefüllten Gaskissens über den gesamten in Betracht zu ziehenden Betriebstemperaturbereich stets im wesentlichen die gleiche Abbremsung des in das Gaskissen eintauchenden Insassens sichergestellt ist.

Erfindungsgemäß wird diese Aufgabe durch die kennzeichnenden Merkmale des Anspruchs 1 gelöst. Unter Umgebungstemperatur bzw. Außentemperatur wird die Betriebstemperatur verstanden, die im Kraftfahrzeug vor einer Zündung des Gasgenerators vorliegt.

Nach der Erfindung wird die in Abhängigkeit von dem Gaskissen-Innendruck unterschiedliche Verzögerungscharakteristik dadurch kompensiert, daß mindestens eine Abströmöffnung, die vorzugsweise in der Gehäusewandung angeordent ist, in ihrer Querschnittsfläche von einer steuerbaren Einstellvorrichtung verändert wird. Bei hohen Innendrücken des gefüllten Gaskissens weist die mindestens eine Abströmöffnung einen größeren Querschnitt auf als bei niedrigeren Innendrücken des Gaskissens. Durch diese Veränderbarkeit der Gesamtquerschnittsfläche der Abströmöffnung bzw. der Abströmöffnungen wird die Gasabströmrate (Menge an abströmendem Gas pro Zeiteinheit) verändert, wobei diese Rate umso größer ist, je größer der Gaskissen-Innendruck ist. Durch die Veränderbarkeit der Abströmöffnung bzw. der Abströmöffnungen wird im gesamten in Betracht zu ziehenden Betriebstemperaturbereich (-35 °C bis +85 °C) eine gleichbleibende Abströmcharakteristik des Druckgases aus dem Gaskissen heraus beim Eintauchen des Insassens erreicht.

Neben einer Vergleichmäßigung des Abströmverhaltens über den gesamten Temperaturbereich und der damit verbundenen Möglichkeit einer Verbesserung der Schutzwirkung auf den Insassen wird mit der erfindungsgemäßen Sicherheitseinrichtung aber auch eine Vergleichmäßigung des Füllungsgrades über den gesamten Temperaturbereich erreicht. Die Größe der Abströmöffnung bzw. -öffnungen hat nämlich auch Einfluß auf die Füllung des Gaskissens mit Druckgas; denn bei einer höheren Druckgaserzeugungsrate tritt dann auch bereits beim Aufblasen des Gaskissens über die hierbei größere Querschnittsfläche der Abströmöffnung mehr Druckgas aus dem System aus als dies bei einer kleineren Druckgaserzeugungsrate der Fall ist. Beide Komponenten (Vergleichmäßigung des Füllungsgrades des Gaskissens und Vergleichmäßigung der Abströmcharakteristik des Druckgases jeweils über den gesamten Temperaturbereich) bewirken eine Vergleichmäßigung des sich auf den Insassen auswirkenden Abbremsverhaltens des Gaskissens.

Nach der Erfindung erfolgt die Kompensation der in Abhängigkeit von dem Gasdruck unterschiedlichen Gaskissen-Dämpfungscharakteristik in erster Linie beim Abströmen des Gases, wenn der zu schützende Insasse in das Gaskissen eintaucht, also nachdem das Gaskissen mit Gas gefüllt ist. Eine Kompensation beim Aufbau des Gaskissen-Innendrucks ist bis auf die Beeinflussung durch die unterschiedlich weite Öffnung der mindestens einen Abströmöffnung (siehe oben) nicht babsichtigt; denn es soll zunächst sichergestellt sein, daß sich das Gaskissen möglichst schnell und durchaus unterschiedlich stark füllt. Eine Kompensation der Gaskissen-Dämpfungscharakteristik durch Steuerung des Druckaufbaus könnte dazu führen, daß sich das Gaskissen in Abhängigkeit von der Betriebstemperatur unterschiedlich schnell füllt, was Kompromisse bei der Auslegung der Sicherheitseinrichtung mit sich bringt.

Die steuerbare mindestens eine Abströmöffnung wird, wie bereits erwähnt, vorzugsweise in der Gehäusewand ausgebildet. Dies ist jedoch nicht zwingend erforderlich. Bei einem Sicherheitssystem, bei dem die Verbrennungsgase (Druckgase) aus dem Gaskissen nicht in den Fahrgastraum hinein sondern aus dem Kraftfahrzeug heraus geführt werden, kann (können) z.B. die in ihrem(n) Querschnitt(en) steuerbare(n) Abströmöffnung(en) auch am Ende der über eine Öffnung mit dem Gehäuseinnern verbundenen Druckgasabführrohrleitung angeordnet sein.

Erfindungsgemäß erfolgt die Steuerung der Abströmöffnungs-Einstellvorrichtung temperaturabhängig. Hierbei muß allerdings die Abhängigkeit der Druckgaserzeugungsrate von der Temperatur bekannt sein. Werden beispielsweise im Gasgenerator Gassätze eingesetzt, bei denen die Druckgaserzeugungsrate proportional zur Temperatur ist, also mit steigender Temperatur die Menge an geliefertem Druckgas pro Zeiteinheit größer ist, wird die Größe des Gesamtquerschnitts der mindestens einen Abströmöffnung proportional zur Temperatur verändert. Bei Verwendung von Gassätzen, bei denen die Druckgaserzeugungsrate mit steigender Temperatur abnimmt, wird durch die Abströmöffnungs-Einstellvorrichtung die Größe der Abströmöffnung umgekehrt proportional zur Temperatur verändert. Die Erfassung der (Außen-)Temperatur, also der Temperatur, der auch die Sicherheitseinrichtung ausgesetzt ist, und die temperaturabhängige Steuerung der Abströmöffnungs-Einstellvorrichtung sind technisch wesentlich einfacher zu realisieren als eine innendruckabhängige oder druckgaserzeugungsratenabhängige Ansteuerung der Abströmöffnungs-Einstellvorrichtung.

Die Veränderung der effektiven Querschnittsfläche der Abströmöffnung oder, bei mehreren Abströmöffnungen, die Veränderung der effektiven Gesamtquerschnittsfläche der Abströmöffnungen (Summe der Querschnittsflächen sämtlicher Abströmöffnungen) wird vorteilhafterweise durch einen bewegbaren insbesondere am Gehäuse verschiebbar geführten Steuerschieber zum Öffnen und Schließen der Abströmöffnung bzw. -öffnungen. Hierbei weist die Abströmöffnungs-Einstellvorrichtung neben dem Steuerschieber auch eine Antriebsvorrichtung zum stufenlosen oder bistabilen Bewegen des Steuerschiebers auf, so daß der Anteil an von dem Steuerschieber verschlossener Querschnittsfläche der mindestens einen Abströmöffnung oder Gesamtquerschnittsfläche sämtlicher Abströmöffnungen beeinflußbar ist.

In vorteilhafter Weiterbildung der Erfindung ist vorgesehen, daß die Antriebsvorrichtung als Bimetallstab ausgebildet ist, der an seinem einen Ende fest gelagert ist und in seinem frei bewegbaren Abschnitt zum Bewegen des Steuerschiebers mit diesem gekoppelt ist. Sofern die Bewegung des Bimetallstabes sowohl bezüglich des Grades der Bewegungsveränderung als auch der bei Bewegung aufgebrachten Kraft nicht ausreichend ist, kann zwischen dem Bimetallstab und dem Steuerschieber ein Getriebe zum Umsetzen der Bimetallstab-Bewegung in eine Steuerschieber-Bewegung angeordnet werden.

Anstelle der Verwendung eines Steuerschiebers kann aber auch jede andere denkbare Verschlußvorrichtung eingesetzt werden, mit der sich die Querschnitte von Öffnungen auf einfache Weise verändern lassen. Beispielsweise könnten auch Verschlußvorrichtungen eingesetzt werden, die nach Art einer Irisblende arbeiten.

Bei Ausbildung mehrerer Abströmöffnungen zur Beeinflussung des Abströmverhaltens des Druckgases insbesondere beim Eintauchen des Insassens in das Gaskissen ist es grundsätzlich möglich, sämtliche Abströmöffnungen bezüglich ihres Querschnitts durch die Abströmöffnungs-Einstellvorrichtung (gleichzeitig) stufenlos zu verändern. Es ist aber auch denkbar, daß die Abströmöffnungen gruppenweise zusammengefaßt sind, wobei für jede Gruppe von Abströmöffnungen eine gemeinsame mit einer Antriebsvorrichtung versehene Verschlußvorrichtung vorgesehen ist, oder jede Abströmöffnung jeder Gruppe über eine separate Verschlußvorrichtung mit separater Antriebsvorrichtung verfügt. Bei gruppenweiser Zusammenfassung der Abströmöffnungen kann die Abströmöffnungs-Einstellvorrichtung derart gesteuert werden, daß in Abhängigkeit von dem Gasinnendruck, der Gaserzeugungsrate oder der Temperatur die Abströmöffnungen gruppenweise geöffnet bzw. geschlossen werden. Mit zunehmender Temperatur, zunehmendem Gasdruck oder zunehmender Gaserzeugungsrate wird dann also eine zunehmende Anzahl an Abströmöffnungen geöffnet bzw. geschlossen; die Antriebsvorrichtungen für die unterschiedlichen Gruppen von Abströmöffnungen sprechen also bei unterschiedlichen Temperaturen an. Bei einer derartig ausgebildeten Abströmöffnung-Einstellvorrichtung brauchen die Abströmöffnungen dann auch nicht mehr stufenlos geöffnet bzw. geschlossen werden; es reicht aus, wenn die Verschlußvorrichtungen lediglich noch zwei Zustände annehmen, nämlich den Auf-Zustand, in dem die Abströmöffnung bzw. -öffnungen voll geöffnet sind, oder den Zu-Zustand, in dem die Abströmöffnung bzw. -öffnungen vollständig verschlossen sind.

Bei Ausbildung mehrerer Abströmöffnungen zur Beeinflussung der Abströmcharakteristik des Druckgases und gleichzeitiger Veränderung sämtlicher Abströmöffnungen durch die Abströmöffnungs-Einstellvorrichtung ist gemäß einer vorteilhaften Weiterbildung der Erfindung vorgesehen, daß die Abströmöffnungen reihenweise nebeneinander angeordnet und gegebenenfalls mehrere derartiger Reihen untereinander angeordnet sind und daß der Steuerschieber mehrere Öffnungen aufweist, die sich bei Vorhandensein mehrerer Abströmöffnungsreihen über sämtliche in einer Spalte angeordneten Abströmöffnungen erstrecken. Die Steuerschieber-Öffnungen sind jeweils fluchtend mit den Abströmöffnungen jeweils einer Spalte ausrichtbar, wobei der Anteil an den von dem Steuerschieber verschlossenen Querschnittsflächen der Abströmöffnungen durch Bewegung des Steuerschiebers veränderbar ist. Bei dieser Ausgestaltung der Erfindung können sämtliche Abströmöffnungen in ihren Querschnitten durch eine gemeinsame Verschlußvorrichtung, nämlich den Steuerschieber bzw. die Steuerplatte, verändert werden.

Neben den zwecks Beeinflussung der Charakteristik der Abströmung des Druckgases aus dem Gaskissen heraus vorgesehenen Abströmöffnungen kann die erfindungsgemäße Sicherheitseinrichtung auch noch Abströmöffnungen aufweisen, die nicht veränderbar sind. Bei diesen Abströmöffnungen handelt es sich beispielsweise um Abströmöffnungen des Gaskissens, wie sie bei den bisherigen Sicherheitseinrichtungen vorgesehen sind. Die erfindungsgemäße Sicherheitseinrichtung läßt sich also auch bei einem "Airbag"-System einsetzen, dessen Gaskissen aus dem bisherigen Material, also mit darin ausgebildeten Abströmöffnungen besteht.

Sofern zu mehreren Gruppen zusammengefaßte Abströmöffnungen zur Beeinflussung der Abströmcharakteristik vorgesehen sind, besteht die Verschlußvorrichtung für jede Gruppe von Abströmöffnungen vorzugsweise aus einem separaten Steuerschieber mit separater Antriebsvorrichtung, wobei jede Antriebsvorrichtung vorzugsweise einen Bimetallstab aufweist und jeder Bimetallstab in seinem Temperaturverhalten unterschiedlich gegenüber den übrigen Bimetallstäben ist.

Nachfolgend wird anhand der Figuren ein Ausführungsbeispiel der Erfindung näher erläutert. Im einzelnen zeigen:
- Fig. 1: einen Querschnitt durch ein Gehäuse mit Gasgenerator und zusammengelegtem Gaskissen,
- Fig. 2: eine Seitenansicht des Gehäuses in Richtung des Pfeils I der Fig. 1 bei einer mittleren Temperatur innerhalb des in Betracht zu ziehenden Temperaturbereichs,
- Fig. 3: eine Seitenansicht des Gehäuses in Richtung des Pfeils I der Fig. 1 bei einer hohen Temperatur innerhalb des in Betracht zu ziehenden Temperaturbereichs, und
- Fig. 4: eine Seitenansicht des Gehäuses in Richtung des Pfeils I der Fig. 1 bei einer niedrigen Temperatur innerhalb des in Betracht zu ziehenden Temperaturbereichs.

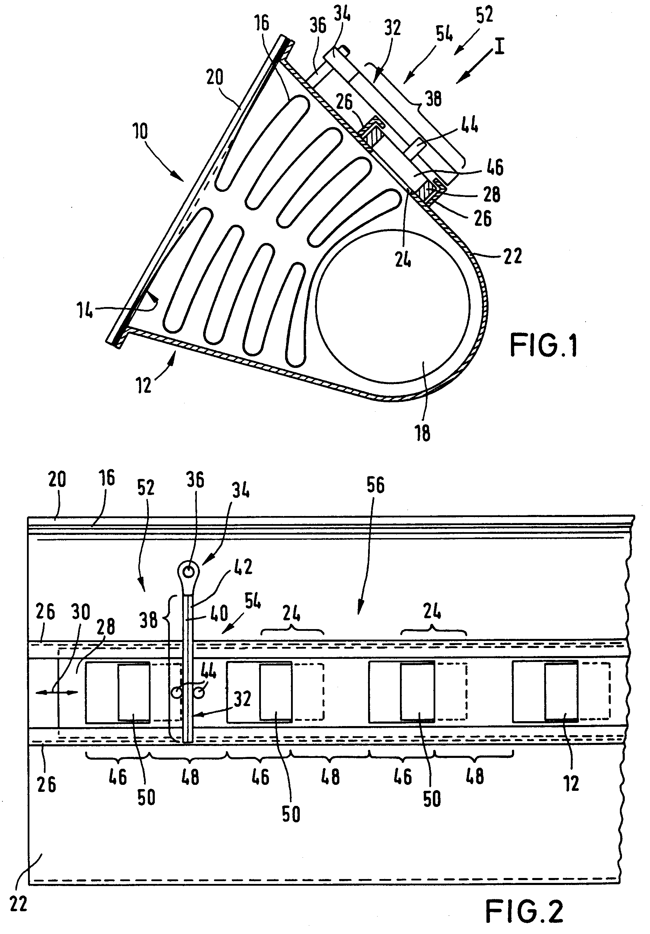

Die Bestandteile der Sicherheitseinrichtung 10 sind zeichnerisch in der Übersichtsdarstellung gemäß Fig. 1 gezeigt. Die Sicherheitseinrichtung 10 weist ein einseitig offenes Gehäuse 12 auf, dessen offene Seite 14 von einer im nicht aktiven Zustand der Sicherheitseinrichtung 10 zusammengelegten in dem Gehäuse 12 untergebrachten Folie oder Haut 16 verschlossen ist. In dem Gehäuse 12 ist an dem der offenen Seite 14 gegenüberliegenden Ende ein Gasgenerator 18 untergebracht. Bei Zündung des Gasgenerators 18 erzeugt dieser Druckgas, woraufhin der Innendruck im Gehäuse 12 ansteigt. Infolge des erhöhten Innendrucks wird eine im Bereich der offenen Seite 14 des Gehäuses 12 aufgesetzte Schutzkappe 20 mit (nicht dargestellter) Sollbruchstelle abgelöst. Bei abgelöster Schutzkappe 20 tritt die Folie 16 über die offene Seite 14 aus dem Gehäuse 12 heraus und bildet ein mit dem Druckgas des Gasgenerators 18 gefülltes Gaskissen.

In der Wandung 22 des Gehäuses 12 sind mehrere in einer Reihe nebeneinander angeordnete Abströmöffnungen 24 ausgebildet. Wie insbesondere in Fig. 1 zu erkennen ist, ist die Gehäusewandung 22 im Bereich der Abströmöffnungen 24 auf ihrer Außenseite mit Führungs- und Haltewinkelleisten 26 versehen. Diese Leisten 26, bei denen es sich um 90°-Winkelprofile handelt, stehen von der Außenseite der Gehäusewandung 22 ab und verlaufen zueinander parallel zu beiden Längsseiten der Reihe von Abströmöffnungen 24. Zusammen mit der Gehäusewandung 22 bilden die Leisten 26 C-förmige einander gegenüberliegende Führungen für einen dazwischen angeordneten Steuerschieber 28. Der Steuerschieber 28 ist in den durch einen Doppelpfeil 30 angedeuteten beiden Richtungen am Gehäuse 12 längsverschiebbar zwischen den Führungs- und Haltewinkelleisten 26 geführt und gehalten.

Mit dem Steuerschieber 28 gekoppelt ist ein Bimetallstab 32, dessen eines Ende 34 drehfest an einem Haltestift 36 gelagert ist, der seinerseits drehfest mit der Gehäusewandung 22 verbunden ist. Der Bimetallstab 32 ist im Abstand zur Gehäusewandung 22 angeordnet und verläuft parallel zu dieser, wobei sein frei bewegbarer Abschnitt 38 über den Steuerschieber 28 ragt. Der Bimetallstab 32 besteht in bekannter Weise aus zwei Materialstäben 40,42 mit unterschiedlichen Wärmeausdehnungskoeffizienten. Die einander zugewandten Flächen der beiden Materialstäbe 40,42 sind derart miteinander verbunden, daß eine Verschiebung der beiden Materialstäbe 40,42 relativ zueinander verhindert ist. Der dem Ende 34 gegenüberliegende Endabschnitt des frei bewegbaren Abschnitts 38 des Bimetallstabes 32 verläuft zwischen zwei mit dem Steuerschieber 28 verbundenen Lagerstiften 44.

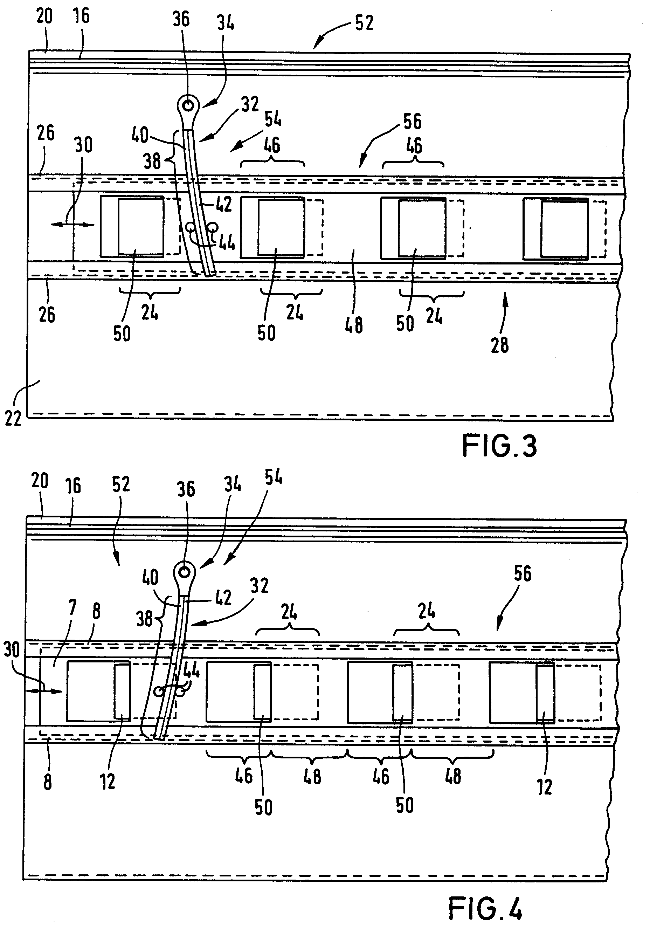

In Abhängigkeit von der Temperatur verbiegt sich der frei bewegbare Abschnitt 38 des Bimetallstabes 32 entweder zu der einen oder der anderen Seite. In Fig. 2 ist die Lage des Bimetallstabes 32 bei einer mittleren Temperatur innerhalb des in Betracht zu ziehenden Temperaturbereichs von -35 °C bis +85 °C, für den die Fahrzeuginsassen-Sicherheitseinrichtung 10 ausgelegt sein muß, dargestellt. Fig. 3 zeigt die Richtung der Verbiegung des Bimetallstabes 32 bei höheren Temperaturen, bei denen der Steuerschieber 28 in Richtung des Pfeils 30 verschoben wird. Schließlich zeigt Fig. 4 die Richtung der Verbiegung des Bimetallstabes 32 bei niedrigeren Temperaturen, bei denen der Steuerschieber 28 in Richtung des Pfeils 30 verschoben wird.

Wie man anhand der Figuren erkennen kann, ist der Steuerschieber 28 mit mehreren gleichmäßig voneinander beabstandeten Öffnungen 46 versehen. Die Öffnungen 46 überlappen sich teilweise mit den ebenfalls in gleichmäßigen Abständen zueinander angeordneten Abströmöffnungen 24 in der Gehäusewandung 22. Je nach der Verschiebungsposition des Steuerschiebers 28 relativ zu den Abströmöffnungen 24 fluchtet ein größerer oder ein kleinerer Teil der Schieberöffnungen 46 mit einem Teil der Abströmöffnungen 24. Der Steuerschieber 28 überdeckt also mit seinen zwischen seinen Öffnungen 46 befindlichen Verschlußabschnitten 48 mehr oder weniger die Abströmöffnungen 24, und zwar in Abhängigkeit von seiner Verschiebeposition, die wiederum temperaturabhängig ist. Damit läßt sich für jede Abströmöffnung 24 deren effektive Querschnittsfläche 50, über die das Druckgas beim Aufprall des Insassen auf das gefüllte Gaskissen austritt, temperaturabhängig verändern. Die Querschnittsveränderung erfolgt dabei derart, daß mit zunehmender Temperatur die effektive Querschnittsfläche 50 jeder Abströmöffnung 24 vergrößert und mit abnehmender Temperatur verkleinert wird. Da der in dem Gasgenerator 18 verwendete Gassatz mit zunehmender Temperatur eine größer werdende Menge an Gas erzeugt, kann das bei hohen Temperaturen unter einem größeren Druck stehende Gas des Gaskissens beim Aufprall des Insassens auf das Gaskissen schneller abgeführt werden als bei niedrigeren Temperaturen, bei denen der Innendruck des Gaskissens wegen der bei diesen Temperaturen niedrigeren Gaserzeugungsrate niedriger ist. Insgesamt wird auf diese Weise eine Vergleichmäßigung der Abströmcharakteristik des Druckgases über den gesamten Temperaturbereich erzielt.

Bei der aus dem Steuerschieber 28 mit dessen Öffnungen 46 und Verschlußabschnitten 48 und dem Bimetallstab 32 sowie den Lagerstiften 44 handelt es sich um eine Abströmöffnungs-Einstellvorrichtung 52 zum verändern der Gesamtquerschnittsfläche 50 der Abströmöffnungen 24. Der Bimetallstab 32 hat dabei die Aufgabe einer Antriebsvorrichtung 54 zum Verstellen einer Verschlußvorrichtung 56, mit der die Abströmöffnungen 24 mehr oder weniger verschließbar sind. Die Abströmöffnungs-Einstellvorrichtung 52 ist bei dem in den Figuren dargestellten Ausführungsbeispiel temperaturgesteuert, was bei einem Gasgenerator mit einer zur Temperatur proportionalen Gaserzeugungsrate auf eine von der Gaserzeugungsrate oder dem Gaskissen-Innendruck indirekt abhängige Steuerung hinausläuft.

## Patentansprüche

1. Sicherheitseinrichtung zum Schutz eines Insassens eines Kraftfahrzeuges gegen Verletzungen beim Aufprall, mit
- einem mit Gas aufblasbaren Gaskissen (Folie 16),
- einem einseitig offenen, mit dem Gaskissen (Folie 16) verbundenen Gehäuse (12),
- einem mit dem Gehäuse (12) verbundenen Gasgenerator (18) zum Erzeugen von Druckgas zum Füllen des Gaskissens (Folie 16),
- mindestens einer Abströmöffnung (24) zum Abströmen des Druckgases insbesondere beim Eintauchen des Insassens in das Gaskissen (Folie 16) und
- einer steuerbaren Abströmöffnungs-Einstellvorrichtung (52), die die Gesamtquerschnittsfläche (50) der mindestens einen Abströmöffnung (24) derart verstellt, daß sich die Größe der Gesamtquerschnittsfläche (50) der mindestens einen Abströmöffnung (24) proportional zum Innendruck des gefüllten Gaskissens (Folie 16) verändert,
**dadurch gekennzeichnet**, daß die Abströmöffnungs-Einstellvorrichtung (52) temperaturabhängig gesteuert ist und zwar derart, daß bei einer zur Umgebungstemperatur proportionalen Druckgaserzeugungsrate sich die Größe des Gesamtquerschnitts (50) der mindestens einen Abströmöffnung (24) proportional zur Umgebungstemperatur verändert und daß bei einer zur Umgebungstemperatur umgekehrt proportionalen Druckgaserzeugungsrate sich die Größe der Gesamtquerschnittsfläche (50) der mindestens einen Abströmöffnung (24) umgekehrt proportional zur Umgebungstemperatur verändert.

2. Sicherheitseinrichtung nach Anspruch 1, dadurch gekennzeichnet, daß die Abströmöffnungs-Einstellvorrichtung (52) einen bewegbaren Steuerschieber (28) zum Öffnen und Schließen der mindestens einen Abströmöffnung (24) aufweist und daß die Abströmöffnungs-Einstellvorrichtung (52) eine Antriebsvorrichtung (54) für den Steuerschieber (28) aufweist, die den Steuerschieber (28) zum Verändern des Anteils an der von dem Steuerschieber (28) verschlossenen Gesamtquerschnittsfläche (50) der mindestens einen Abströmöffnung (24) bewegt.

3. Sicherheitseinrichtung nach Anspruch 1 oder 2, dadurch gekennzeichnet, daß die Antriebsvorrichtung (54) einen Bimetallstab (32) aufweist, der an seinem einen Ende festgelegt ist und in einem Abschnitt seines frei bewegbaren Bereichs (38) zum Verschieben des Steuerschiebers (28) mit diesem gekoppelt ist.

4. Sicherheitseinrichtung nach Anspruch 3, dadurch gekennzeichnet, daß zwischen dem bewegbaren Bereich (38) des Bimetallstabes (32) und dem Steuerschieber (28) ein Getriebe zum Umsetzen der Bewegung des Bimetallstabes (32) in eine Verschiebung des Steuerschiebers (28) geschaltet ist.

5. Sicherheitseinrichtung nach einem der Ansprüche 1 bis 4, dadurch gekennzeichnet, daß mehrere Abströmöffnungen (24) vorgesehen sind und daß durch die Abströmöffnungs-Einstellvorrichtung (52) die Querschnitte (50) sämtlicher Abströmöffnungen (24) veränderbar sind.

6. Sicherheitseinrichtung nach Anspruch 3 und 5, dadurch gekennzeichnet, daß die Abströmöffnungen (24) entlang mindestens einer Reihe in gleichmäßigen Abständen zueinander angeordnet sind und daß der Steuerschieber (28) mehrere Öffnungen (46) aufweist, die in einer Reihe nebeneinanderliegend angeordnet sind, wobei sich jeweils eine Öffnung (46) des Steuerschiebers (28) über eine der Reihenanzahl der Abströmöffnungen (24) entsprechende Anzahl von in senkrechter Richtung zur Abströmöffnungsreihe aufeinanderfolgender Abströmöffnungen (24) erstrecken.

7. Sicherheitseinrichtung nach einem der Ansprüche 1 bis 4 oder 6, dadurch gekennzeichnet, daß mehrere Abströmöffnungen (24) vorgesehen sind und daß durch die Abströmöffnungs-Einstellvorrichtung (52) die Querschnitte lediglich einer Teilmenge der Abströmöffnungen (24) veränderbar ist.

8. Sicherheitseinrichtung nach einem der Ansprüche 1 bis 4 oder 6, dadurch gekennzeichnet, daß mehrere Gruppen von Abströmöffnungen (24) vorgesehen sind, wobei jede Gruppe mindestens eine Abströmöffnung (24) aufweist, und daß die Abströmöffnungs-Einstellvorrichtung den Gesamtquerschnitt (50) sämtlicher Abströmöffnungen (24) dadurch verändert, daß die Abströmöffnungen gruppenweise geöffnet oder geschlossen werden.

9. Sicherheitseinrichtung nach Anspruch 8, dadurch gekennzeichnet, daß die Abströmöffnungs-Einstellvorrichtung (52) für jede Gruppe von Abströmöffnungen (24) einen bewegbaren Steuerschieber (28) zum Öffnen und Schließen der mindestens einen Abströmöffnung (24) dieser Gruppe aufweist und daß die Abströmöffnungs-Einstellvorrichtung (52) für jeden Steuerschieber (28) eine separate Antriebsvorrichtung (54) aufweist, die den betreffenden Steuerschieber (28) zum Verändern des Anteils an von diesem verschlossener Querschnittsfläche (50) der mindestens einen Abströmöffnung (24) bewegt.

10. Sicherheitseinrichtung nach Anspruch 9, dadurch gekennzeichnet, daß jede Antriebsvorrichtung (54) einen in seinem temperaturabhängigen Verhalten unterschiedlichen Bimetallstab (32) aufweist, der an seinem einen Ende (34) festgelegt ist und in einem Abschnitt seines frei bewegbaren Bereichs (38) zum Verschieben des Steuerschiebers (28) mit diesem gekoppelt ist, und daß die Veränderung des Anteils an der von einem Steuerschieber (28) verschlossenen Gesamtquerschnittsfläche (50) der mindestens einen zugehörigen Abströmöffnung (24) pro Gruppe von Abströmöffnungen (24) und Steuerschieber (28) unterschiedlich ist.

## Claims

1. A safety device for protecting a passenger of a motor vehicle from injury in a collision, having
- a gas cushion able to be inflated by gas (sheet 16),
- a housing (12) connected to the gas cushion (sheet 16), and open on one side,
- a gas generator (18) connected to the housing (12) for generating gas under pressure for filling the gas cushion (sheet 16) and
- at least one escape opening (24) for escape of the gas under pressure, in particular when the passenger pitches into the gas cushion (sheet 16), and
- a controllable escape opening adjusting device (52) which is so controlled that the size of the total cross-sectional area (50) of the at least one escape opening (24) changes in proportion to the internal pressure of the filled gas cushion (sheet 16),
- characterised in that the escape opening-adjusting device (52) is controlled dependent on temperature and indeed so that, at a production rate for the gas under pressure proportional to the ambient temperature, the size of the total cross section (50) of the at least one escape opening (24) changes in proportion to the ambient temperature and that with a rate of production of gas under pressure inversely proportional to the ambient temperature, the size of the total cross section (50) of the at least one escape opening (24) changes in inverse proportion to the ambient temperature.

2. A safety device according to claim 1, characterised in that the escape opening-adjusting device (52) has a displaceable control slide valve (28) for opening and closing the at least one escape opening (24) and in that the escape opening-adjusting device (52) has a drive device (54) for the control slide valve (28) which moves the control slide valve (28) for altering the proportion of the total cross-sectional area (50) of the at least one escape opening (24), closed by the control slide valve (28).

3. A safety device according to claim 1 or 2, characterised in that the drive device (54) has a bimetallic bar (32), which is fastened at one of its ends and, in one section of its freely displaceable region (38), in order to displace the control slide valve (28), is coupled to the latter.

4. A safety device according to claim 3, characterised in that connected between the displaceable region (38) of the bimetallic bar (32) and the control slide valve (28) there is a gear unit for transferring the movement of the bimetallic bar (32) into a displacement of the control slide valve (28).

5. A safety device according to one of claims 1 to 4, characterised in that, several escape openings (24) are provided, and in that the cross-sections (50) of all escape openings (24) can be altered by means of the escape opening-adjusting device (52).

6. A safety device according to claim 3 and 5, characterised in that the escape openings (24) are arranged evenly spaced from each other along at least one row and in that the control slide valve (28) has several openings (46), which are arranged side by side in a row with, in each case, one opening (46) of the control slide valve (28) extending over a number of successive openings (24) in a perpendicular direction to the row of escape openings, corresponding to the number of rows of escape openings (24).

7. A safety device according to one of claims 1 to 4 or 6, characterised in that several escape openings (24) are provided and in that the cross-sections of only a subset of the escape openings (24) can be altered by means of the escape opening-adjusting device (52).

8. A safety device according to one of claims 1 to 4, or 6, characterised in that several groups of escape openings (24) are provided, with each group having at least one escape opening (24) and in that the escape opening-adjusting device alters the total cross-section (50) of all escape openings (24), in that the escape openings are opened or closed in groups.

9. A safety device according to claim 8, characterised in that the escape opening-adjusting device (52) for each group of escape openings (24) has a displaceable control slide valve (28) for opening and closing the at least one escape opening (24) of this group and in that the escape opening-adjusting device (52) for each control slide valve (28) has a separate drive device (54), which displaces the respective control slide valve (28) for altering the proportion of the cross-sectional area (50), closed by this, of the at least one escape opening (24).

10. A safety device according to claim 9, characterised in that each drive device (54) has a bimetallic bar varying in its temperature-dependent behaviour, which is fastened at one of its ends (34) and, in one section of its freely displaceable region (38), in order to displace the control slide valve (28), is coupled to this, and in that the alteration of the proportion of the total cross-sectional area, closed by a control slide valve (28), of the at least one associated escape opening (24) varies per group of escape openings (24) and control slide valve (28).

## Revendications

1. Dispositif pour la protection des passagers d'un véhicule automobile contre des blessures en cas de collision, comportant
- un coussin de gaz (feuille 16) gonflé avec un gaz,
- un boîtier (12) ouvert d'un côté, lié au coussin de gaz (feuille 16),
- un générateur de gaz (18) lié au boîtier (12), pour produire du gaz sous pression aux fins de remplir le coussin (feuille 16),
- au moins un orifice d'échappement (24) pour l'échappement du gaz sous pression, notamment lorsque le passager s'enfonce dans le coussin (feuille 16) et
- un dispositif (52) commandé de réglage de l'orifice d'échappement qui modifie la section totale (50) de l'orifice d'échappement au nombre d'au moins un de manière telle que la valeur de la section totale (50) de l'orifice d'échappement (24) au nombre d'au moins un varie proportionnellement à la pression intérieure du coussin de gaz (feuille 16) rempli,
caractérisé par le que le dispositif (52) de réglage de l'orifice d'échappement est commandé en fonction de la température de manière telle que pour un taux taux de production de gaz proportionnel à la température ambiante, la valeur de la section totale (50) de l'orifice d'échappement (24) au nombre d'au moins un varie proportionnellement à la température ambiante et que pour une production de gaz inversement proportionnelle à la température ambiante, la valeur de la section totale (50) de l'orifice au nombre d'au moins un varie en raison inverse de la température ambiante.

2. Dispositif de sécurité selon la revendication 1, caractérisé par le fait que le dispositif (52) de réglage de l'orifice d'échappement comporte un tiroir (28) mobile de contrôle pour ouvrir et fermer l'orifice d'échappement (24) au nombre d'au moins un et que le dispositif (52) de réglage de l'orifice d'échappement comporte un dispositif d'entraînement (54) pour le tiroir (28), qui déplace ledit tiroir de contrôle (28) afin de modifier la valeur de la section totale (50) de l'orifice d'échappement (24) au nombre d'au moins un.

3. Dispositif de sécurité selon la revendication 1 ou 2, caractérisé par le fait que le dispositif d'entraînement (54) comporte un barreau bilame (32) qui est monté fixe par l'une de ses extrémités et est couplé au tiroir de contrôle (28) par une partie (38) librement de son extrémité mobile, aux fins de déplacer ledit tiroir.

4. Dispositif de sécurité selon la revendication 3, caractérisé par le fait qu'un mécanisme destiné à transformer le mouvement du barreau bilame (32) en une translation du tiroir de contrôle (28) est monté entre la partie mobile (38) du barreau bimétallique (32) et le tiroir de contrôle (28).

5. Dispositif de sécurité selon l'une des revendications 1 à 4, caractérisé par le fait qu'il est prévu plusieurs orifices d'échappement (24) et que les sections (50) de tous les orifices d'échappement (24) peuvent être modifiées à l'aide du dispositif de réglage (52) de l'orifice d'échappement.

6. Dispositif de sécurité selon les revendications 3 et 5, caractérisé par le fait que les orifices d'échappement (24) sont disposés en au moins une ligne, à distance régulière et que le tiroir de contrôle (28) comporte plusieurs orifices (46) qui sont disposés en ligne les uns à côté des autres, un orifice (46) du tiroir de contrôle (28) s'étendant sur un nombre d'orifices d'échappement (24) successifs, perpendiculairement à la rangée d'orifices d'échappement, qui correspond au nombre de rangées d'orifices d'échappement.

7. Dispositif de sécurité selon l'une des revendications 1 à 4 ou 6, caractérisé par le fait qu'il est prévu plusieurs orifices d'échappement (24) et que les sections d'une partie seulement des orifices d'échappement (24) peut être modifiée à l'aide du dispositif de réglage (52) des orifices d'échappement.

8. Dispositif de sécurité selon l'une des revendications 1 à 4 ou 6, caractérisé par le fait qu'il est prévu plusieurs groupes d'orifices d'échappement (24), chaque groupe comprenant au moins un orifice d'échappement (24) et que le dispositif de réglage modifie la section totale (50) de tous les orifices d'échappement (24) en ouvrant ou en fermant lesdits orifices d'échappement (24) par groupe.

9. Dispositif de sécurité selon la revendication 8, caractérisé par le fait que le dispositif de réglage (52) des orifices d'échappement de chaque groupe d'orifices (24) comporte un tiroir de contrôle (28) mobile pour ouvrir et fermer l'orifice d'échappement au nombre d'au moins un et que le dispositif de réglage (52) des orifices d'échappement comporte un dispositif d'entraînement séparé pour chaque tiroir (28) qui déplace le tiroir de contrôle (28) concerné aux fins de modifier la valeur de la section (50).

10. Dispositif de sécurité selon la revendication 9, caractérisé par le fait que chaque dispositif d'entraînement (54) comporte un barreau bilame (32) doté d'un comportement thermique différent qui est monté fixe à une extrémité et est couplé par une partie de son extrémité librement mobile afin de déplacer le tiroir de contrôle (28) et que la modification de la valeur de la section totale (50) de l'orifice d'échappement (24) fermé par le tiroir est différente pour chaque groupe d'orifices d'échappement (24) et chaque tiroir (28).
